# EUROPÄISCHE PATENTANMELDUNG

(11) **EP 4 311 714 A1**
(43) Veröffentlichungstag der Anmeldung: **31.01.2024**
(21) Anmeldenummer: 22186690.8
(22) Anmeldetag: 25.07.2022
(51) Int. Cl.: B60L 50/50, B60L 50/75, H02J 7/14

(54) **VORRICHTUNG ZUR ELEKTRISCHEN LEISTUNGSÜBERTRAGUNG**

(71) Anmelder: KNORR-BREMSE Systeme für Nutzfahrzeuge GmbH, 80809 München (DE)
(72) Erfinder: STANKOVIC, Dordo, 81929 München (DE); WINZER, Rainer, 81667 München (DE); SCHALLER, Sebastian, 86462 Langweid (DE); FELDT, Thomas, 85435 Erding (DE); COMPERA, Yves, 85748 Garching bei München (DE)

(57) **Zusammenfassung**

Es wird eine Vorrichtung (10) zur elektrischen Leistungsübertragung innerhalb eines elektrischen Energieversorgungssystems (1) eines Fahrzeugs offenbart, wobei die Vorrichtung (10 folgende Elemente aufweist:
- einen Leistungsbereitstellungsanschluss (12), der dazu ausgebildet ist, elektrisch mit mindestens einem Leistungsbereitsteller (2) verbunden zu werden;
- einen Energiespeicheranschluss (13), der dazu ausgebildet ist, elektrisch mit mindestens einem elektrischen Energiespeicher (3) verbunden zu werden;
- einen Verbraucheranschluss (14), der dazu ausgebildet ist, elektrisch mit mindestens einem elektrischen Verbraucher (4) verbunden zu werden; und
- eine Schalteinrichtung (15), wobei
die Vorrichtung (10) dazu ausgebildet ist,
- gemäß einem ersten Schaltzustand der Schalteinrichtung (15) eine direkte elektrische Verbindung zwischen dem Leistungsbereitstellungsanschluss (12) und dem Verbraucheranschluss (14), und
- gemäß einem zweiten Schaltzustand der Schalteinrichtung (15) eine direkte elektrische Verbindung zwischen dem Energiespeicheranschluss (13) und dem Verbraucheranschluss (14) herzustellen.

Ferner werden ein Energieversorgungssystem (1) und ein Fahrzeug offenbart.

## Beschreibung

Die vorliegende Erfindung bezieht sich auf eine Vorrichtung zur elektrischen Leistungsübertragung innerhalb eines elektrischen Bordnetzes eines Fahrzeugs. Ferner bezieht sich die Erfindung auf ein Energieversorgungsystem mit einer solchen Vorrichtung und auf ein Fahrzeug mit einer solchen Vorrichtung oder mit einem solchen Energieversorgungsystem.

In elektrischen Energieversorgungsystemen gilt es elektrische Leistung von einer Quelle zu einem Empfänger bzw. Verbraucher zu übertragen. Bei der aktuell stattfindenden Elektrifizierung der Antriebsstränge von Fahrzeugen kommen als Quellen elektrischer Leistung elektrische Energiespeicher und auch Leistungsbereitsteller wie Brennstoffzellen, Photovoltaikpanele und Range-Extender zum Einsatz. Elektrische Energiespeicher umfassen dabei typischerweise Batterien unterschiedlichen Spannungsniveaus. Die elektrischen Energiespeicher dienen dazu, ihre Energie an Verbraucher abzugeben. Diese Energiespeicher sind üblicherweise aufladbar gestaltet, so dass Energie, welche beispielsweise durch eine elektrische Antriebsmaschine im Generatorbetrieb als Rekuperationsleistung zur Verfügung gestellt wird, in dem Energiespeicher gespeichert werden kann. Eine weitere, vom Begriff des elektrischen Energiespeichers umfasste Ausführungsform ist ein Kondensator, im Fahrzeugbau auch als "Super-Cap" bekannt. Eine Brennstoffzelle wandelt die chemische Reaktionsenergie eines kontinuierlich zugeführten Brennstoffes und eines Oxidationsmittels in elektrische Energie um und stellt diese zur Verfügung. Dabei ist unter dem Begriff Brennstoffzelle insbesondere eine Wasserstoff-Sauerstoff-Brennstoffzelle zu verstehen, jedoch sind nachfolgend andere Brennstoffzellenarten nicht grundsätzlich ausgeschlossen. Unter einem Verbraucher sind nachfolgend Vorrichtungen zu verstehen, die elektrische Energie der Brennstoffzelle und/oder des elektrischen Energiespeichers verbrauchen. In bestimmten Betriebssituationen, wie dem Generatorbetrieb einer elektrischen Antriebsmaschine kann ein Verbraucher jedoch auch als Quelle fungieren und elektrische Leistung bzw. Energie zur Verfügung stellen, die dann beispielsweise dem elektrischen Energiespeicher zugeführt werden kann. Photovoltaikpanele erzeugen elektrische Leistung aus Sonnenlicht. Range-Extender stellen elektrische Leistung bereit, indem sie diese aus einer anderen Energieform zur Verfügung stellen. Beispielsweise ist darunter ein mit Kraftstoff betriebener Generator zu verstehen.

Problematisch stellt sich hierbei dar, dass die Leistungsbereitsteller, der elektrische Energiespeicher und die Verbraucher üblicherweise auf unterschiedlichen Spannungsniveaus betrieben werden. Die zum Zweck der Spannungsangleichung eingesetzten Spannungswandler, welche üblicherweise als DC-DC-Wandler ausgeführt sind, führen jedoch zu Leistungsverlusten, welche üblicherweise im Bereich von 3 % und 5 % liegen.

Es ist daher die Aufgabe der vorliegenden Erfindung, dieses Problem zu lösen und Verluste durch Spannungswandlung zumindest teilweise zu vermeiden.

Diese Aufgabe wird durch die Gegenstände der unabhängigen Ansprüche gelöst. Vorteilhafte Weiterbildungen sind Gegenstand der Unteransprüche.

Erfindungsgemäß ist eine Vorrichtung zur elektrischen Leistungsübertragung innerhalb eines elektrischen Energieversorgungssystems eines Fahrzeugs vorgesehen, wobei die Vorrichtung folgende Elemente aufweist:
- einen Leistungsbereitstellungsanschluss, der dazu ausgebildet ist, elektrisch mit mindestens einem Leistungsbereitsteller verbunden zu werden;
- einen Energiespeicheranschluss, der dazu ausgebildet ist, elektrisch mit mindestens einem elektrischen Energiespeicher verbunden zu werden;
- einen Verbraucheranschluss, der dazu ausgebildet ist, elektrisch mit mindestens einem elektrischen Verbraucher verbunden zu werden; und
- eine Schalteinrichtung.

Die Vorrichtung ist dazu ausgebildet, gemäß einem ersten Schaltzustand der Schalteinrichtung eine direkte elektrische Verbindung zwischen dem Leistungsbereitstellungsanschluss und dem Verbraucheranschluss und gemäß einem zweiten Schaltzustand der Schalteinrichtung eine direkte elektrische Verbindung zwischen dem Energiespeicheranschluss und dem Verbraucheranschluss herzustellen.

Über den Leistungsbereitstellungsanschluss kann elektrische Leistung von dem mindestens einen Leistungsbereitsteller an die Vorrichtung übertragen werden. Ein Leistungsbereitsteller kann insbesondere ein Aggregat umfassen, das Gleichspannung liefert. Ein solches Aggregat kann eine Brennstoffzelle, ein Photovoltaikpanel oder einen Range-Extender umfassen. Beispielsweise ist denkbar, dass der Leistungsbereitstellungsanschluss mit mindestens einer Brennstoffzelle und/oder mit mindestens einem Photovoltaikpanel und/oder mit mindestens einem Range-Extender verbunden ist, sodass elektrische Leistung an die Vorrichtung übertragen werden kann. Der Leistungsbereitstellungsanschluss kann damit insbesondere als Brennstoffzellenanschluss und/oder als Photovoltaikpanelanschluss und/oder als Range-Extender-Anschluss fungieren.

Der Leistungsbereitstellungsanschluss muss nicht zwingend als eine räumlich verdichtete Ansammlung von mehreren Anschlusskontakten des Leistungsbereitstellers vorliegen. D.h. die Anschlusskontakte können auch an unterschiedlichen Bereichen der Vorrichtung liegen. Gleiches gilt für den Energiespeicheranschluss und den Verbraucheranschluss. Im einfachsten Fall ist ein solcher Anschluss jedoch durch die elektrischen Kontakte realisiert, die dazu benötigt werden, einen einzigen Leistungsbereitsteller oder einen einzigen elektrischen Energiespeicher oder einen einzigen elektrischen Verbraucher anzuschließen. Nachfolgend werden die einzelnen Anschlusskontakte als Abschnitte, also Leistungsbereitstellungsanschlussabschnitt, Energiespeicheranschlussabschnitt und Verbraucheranschlussabschnitt bezeichnet, sollte dies bei der entsprechenden Ausführungsform aufgrund mehrerer angeschlossener Leistungsbereitsteller, Energiespeichern oder Verbrauchern nötig sein.

Unter einem elektrischen Verbraucher, der mit dem Verbraucheranschluss verbunden werden kann, sind insbesondere Vorrichtungen zu verstehen, die dem elektrischen Antriebsstrang des Fahrzeugs zuzuordnen sind, wie insbesondere eine E-Maschine oder ein Inverter oder ein Kompressor, der insbesondere zur Förderung von Luft für die oder eine Brennstoffzelle vorgesehen ist. Es können darunter aber auch andere Vorrichtungen wie ein Bordnetz, insbesondere ein 24V-Bordnetz oder auch ein HV-Bordnetz oder allgemein andere Nebenaggregate verstanden werden. Diese Nebenaggregate können Komforteinrichtungen, wie eine Innenraumheizung oder eine Klimatisierung, bspw. für das Fahrerhaus des Fahrzeugs, umfassen. Alternativ oder zusätzlich können die Nebenaggregate auch Elemente der Luftaufbereitung, bspw. für ein pneumatisches Bremssystem oder für eine Luftfederung, insbesondere Kompressoren, umfassen. Diese sind typischerweise einem HV-Bordnetz zugeordnet.

Als direkte elektrische Verbindung ist hier eine Verbindung zur elektrischen Leistungsübertragung zu verstehen, auf der keine Spannungswandlung stattfindet, d.h. die elektrische Leistung wird nicht über einen Spannungswandler geführt. Somit werden die o.g. Leistungsverluste vermieden.

Die Schalteinrichtung ist vorzugsweise als elektrische oder elektronische Schalteinrichtung ausgebildet.

Die Schalteinrichtung ermöglicht somit wahlweise den Leistungsbereitstellungsanschluss bzw. den Energiespeicheranschluss direkt mit dem Verbraucheranschluss zu verbinden. D.h. es sind Schaltzustände möglich, in denen die Leistungsübertragung zum Verbraucheranschluss und dem/den daran angeschlossenen Verbraucher/Verbrauchern von dem Leistungsbereitstellungsanschluss und den/dem daran angeschlossenen Leistungsbereitstellern/Leistungsbereitsteller ermöglicht ist. Weiter sind Schaltzustände möglich, in denen die Leistungsübertragung zum Verbraucheranschluss und dem/den daran angeschlossenen Verbraucher/Verbrauchern von dem Energiespeicheranschluss und dem/den daran angeschlossenen elektrischen Energiespeicher/ Energiespeichern ermöglicht ist.

Weiter kann vorgesehen sein, dass die jeweils andere Verbindung getrennt ist. Liegt also ein Schaltzustand vor, in dem eine direkte Verbindung zur Leistungsübertragung zwischen dem Leistungsbereitstellungsanschluss und dem Verbraucheranschluss besteht, so kann eine Verbindung zwischen dem Energiespeicheranschluss und dem Verbraucheranschluss durch die Schalteinrichtung getrennt sein. Hierfür kann ein separates Schaltmittel in der Schalteinrichtung vorgesehen sein. Alternativ oder zusätzlich kann ein Schaltzustand vorliegen, in dem eine direkte Verbindung zur Leistungsübertragung zwischen dem Energiespeicheranschluss und dem Verbraucheranschluss besteht, so kann eine Verbindung zwischen dem Leistungsbereitstellungsanschluss und dem Verbraucheranschluss durch die Schalteinrichtung getrennt sein. Hierfür kann ein separates Schaltmittel in der Schalteinrichtung vorgesehen sein.

Vorzugsweise weist die Vorrichtung mindestens einen Spannungswandler auf. Dieser kann besonders bevorzugt als DC-DC-Wandler ausgeführt sein.

Bevorzugt kann vorgesehen sein, dass die Vorrichtung als Ganzes als Modul ausgebildet ist, d.h., dass zumindest der Leistungsbereitstellungsanschluss, der Energiespeicheranschluss, der Verbraucheranschluss sowie die Schalteinrichtung zusammen ein Modul bilden. Somit kann die Vorrichtung selbst als Modul ausgeführt sein und vorzugsweise ein Gehäuse oder Trägerelement, wie eine Grundplatte, aufweisen, das zumindest den Leistungsbereitstellungsanschluss, den Energiespeicheranschluss, den Verbraucheranschluss sowie die Schalteinrichtung aufweist oder enthält. Auf diese Weise wird eine bauliche Einheit geschaffen, die als Ganzes ein- und ausgebaut werden kann, wodurch sich Montage und Wartung erleichtern. Vorzugsweise umfasst die Vorrichtung auch zumindest einen der o.g. Spannungswandler. Auf diese Weise wird somit auch Leitungsweg zum Spannungswandler verkürzt oder komplett eingespart.

Vorzugsweise ist die Vorrichtung dazu eingerichtet, gemäß dem ersten Schaltzustand der Schalteinrichtung eine elektrische Verbindung zwischen dem Energiespeicheranschluss und dem Verbraucheranschluss über einen der Spannungswandler herzustellen.

Alternativ oder zusätzlich ist die Vorrichtung dazu eingerichtet, gemäß dem zweiten Schaltzustand der Schalteinrichtung eine elektrische Verbindung zwischen dem Leistungsbereitstellungsanschluss und dem Verbraucheranschluss über einen der Spannungswandler herzustellen.

Gemäß beider vorstehend beschriebener Ausführungsformen, ist es möglich, elektrische Leistungsübertragung in Ergänzung zu der jeweils bestehenden direkten Verbindung zu realisieren, indem der Anschluss (Leistungsbereitstellungsanschluss oder Energiespeicheranschluss), der gerade nicht in direkter Verbindung mit dem Verbraucheranschluss steht, über den mindestens einen Spannungswandler mit dem Verbraucheranschluss verbunden wird. Hier stellen sich zwar Leistungsverluste durch die Verwendung des Wandlers ein, allerdings sind so weitere Funktionen, wie z.B. Boosten aus dem elektrischen Energiespeicher oder durch den Leistungsbereitsteller, die mit dem entsprechenden Anschluss verbunden sind, möglich. Die Schalteinrichtung kann dafür ein separates Schaltmittel aufweisen. Alternativ kann die Verbindung auch permanent bestehen.

Es ist dabei möglich, dass im ersten und zweiten Schaltzustand derselbe Spannungswandler eingesetzt wird. Alternativ können auch unterschiedliche Spannungswandler eingesetzt sein. So ist es möglich, die unterschiedlichen Spannungswandler optimal auf die mit den Anschlüssen verbundenen Energiespeicher bzw. Leistungsbereitsteller auszulegen.

Vorzugsweise ist der Leistungsbereitstellungsanschluss mit dem Energiespeicheranschluss über einen der Spannungswandler elektrisch verbunden. Auf diese Weise ist es möglich, elektrische Leistung von dem Leistungsbereitstellungsanschluss zu dem Energiespeicheranschluss zu übertragen. D.h. es kann eine Leistungsübertragung von einer oder von mehreren mit dem Leistungsbereitstellungsanschluss verbundenen Leistungsbereitstellern zu einem oder mehreren mit dem Energiespeicheranschluss verbundenen elektrischen Energiespeichern erfolgen. Somit kann vorteilhafterweise ein gewünschter Ladezustand des oder der elektrischen Energiespeicher eingestellt werden.

Dabei kann die Leistung über einen Spannungswandler geführt werden, welcher mit einem der o.g. Spannungswandler identisch ist. Alternativ kann auch ein separater Spannungswandler hierfür vorgesehen sein.

Die elektrische Verbindung zwischen dem Leistungsbereitstellungsanschluss und dem Energiespeicheranschluss kann in einer Ausführungsform der Erfindung auch schaltbar gestaltet sein, d.h. sie kann auch getrennt werden. Vorzugsweise ist zur Schaltung der Verbindung die Schalteinrichtung ausgebildet. Das Herstellen der elektrischen Verbindung kann Bestandteil des ersten Schaltzustandes und/oder des zweiten Schaltzustandes und/oder eines weiteren Schaltzustandes sein.

Vorzugsweise weist die Schalteinrichtung zur Realisierung der Schaltzustände mindestens ein Schaltmittel auf. Bevorzugt ist mindestens eins der Schaltmittel mit mindestens einem der Spannungswandler als Schaltmodul ausgeführt. Das mindestens eine Schaltmittel kann als elektrisches oder elektronisches Schaltmittel ausgeführt sein. Durch die Ausführung als Schaltmodul, d.h. durch die bauliche Nähe von Spannungswandler und Schaltmittel, ist es möglich, eine entsprechende elektrische Leitung zu verkürzen oder ganz einzusparen.

Gemäß einer vorteilhaften Ausführungsform weist die Vorrichtung eine elektrische Verbindung von dem Leistungsbereitstellungsanschluss über mindestens einen Spannungswandler zu dem Energiespeicheranschluss auf. Ein Schaltmittel der Schalteinrichtung ist dabei so angeordnet, dass es wahlweise eine direkte Verbindung von dem Leistungsbereitstellungsanschluss zu dem Verbraucheranschluss oder von dem Energiespeicheranschluss zu dem Verbraucheranschluss herstellen kann. Da das Schaltmittel gemäß dem Modulgedanken in der Vorrichtung und speziell an dem Spannungswandler angeordnet ist, entfallen Leitungen zu dem Schaltmittel, die außerhalb der Vorrichtung vorzusehen wären.

Vorzugsweise weist das Schaltmodul ein Gehäuse auf, in dem das mindestens eine Schaltmittel und der mindestens eine Spannungswandler, vorgesehen sind, oder wobei das Schaltmodul ein Trägerelement, wie eine Grundplatte, aufweist, auf dem das mindestens eine Schaltmittel und der mindestens eine Spannungswandler vorgesehen sind. Auf diese Weise wird eine bauliche Einheit geschaffen, die als Ganzes ein- und ausgebaut werden kann, wodurch sich Montage und Wartung erleichtern.

Vorzugsweise weist die Vorrichtung ein Steuermittel auf, das dazu ausgebildet ist, die Schaltzustände der Schalteinrichtung einzustellen. Vorzugsweise handelt es sich dabei um ein elektronisches Steuermittel, wie einen Microcontroller oder ein Steuergerät. Auch ein solches Steuermittel kann bei modularer Ausführung der Vorrichtung als Teil des Moduls oder des Schaltmoduls vorgesehen sein. Insbesondere kann ein solches Steuermittel in einem entsprechenden Gehäuse oder auf einem entsprechenden Trägerelement vorgesehen sein.

Vorzugsweise weist die Vorrichtung mindestens eine Informationsschnittstelle auf, die zum Empfang einer Information eines mit dem Leistungsbereitstellungsanschluss verbundenen Leistungsbereitstellers und/oder zum Empfang einer Information eines mit dem Energiespeicheranschluss verbundenen elektrischen Energiespeichers und/oder zum Empfang einer Information eines mit dem Verbraucheranschluss verbundenen elektrischen Verbrauchers ausgebildet ist, wobei die Schaltzustände in Abhängigkeit von der empfangenen Information eingestellt werden. Die Informationsschnittstelle steht dabei bevorzugt mit dem Steuermittel in Verbindung, so dass dieses die empfangene Information weiterverarbeiten kann. Die Informationsschnittstelle ist üblicherweise eine Datenschnittstelle, vorzugsweise eine Verbindung zu einem CAN-BUS. Beispielsweise kann die Schalteinrichtung bei einer bestehenden direkten Verbindung zwischen dem Leistungsbereitstellungsanschluss und dem Verbraucheranschluss gemäß dem ersten Schaltzustand zusätzlich eine Verbindung zwischen dem Energiespeicheranschluss und dem Verbraucheranschluss herstellen, um einen Leistungsbedarf am Verbraucheranschluss zu decken, der durch den mit dem Leistungsbereitstellungsanschluss verbundene Leistungsbereitsteller nicht gedeckt werden kann. Gemäß einem anderen Beispiel ist denkbar, den Leistungsbereitstellungsanschluss mit dem Energiespeicheranschluss zu verbinden, um dem damit verbundenen elektrischen Energiespeicher Leistung zuzuführen.

Vorzugsweise ist die Vorrichtung dazu ausgebildet, elektrische Leistung von dem Leistungsbereitstellungsanschluss zu dem Verbraucheranschluss zu übertragen. Dies ist bevorzugt im ersten Schaltzustand in direkter Weise der Fall. Eine solche Leistungsübertragung kann aber auch über einen dazwischen geschalteten Spanungswandler in einem anderen Schaltzustand, beispielsweise dem zweiten Schaltzustand, erfolgen.

Alternativ oder zusätzlich ist die Vorrichtung dazu ausgebildet, elektrische Leistung von dem Verbraucheranschluss zu dem Energiespeicheranschluss und/oder von dem Energiespeicheranschluss zu dem Verbraucheranschluss zu übertragen. Dies ist bevorzugt im zweiten Schaltzustand in direkter Weise der Fall. Eine solche Leistungsübertragung kann aber auch über einen dazwischen geschalteten Spanungswandler in einem anderen Schaltzustand, beispielsweise dem ersten Schaltzustand, erfolgen. Die Leistungsübertragung vom Verbraucheranschluss zum Energiespeicheranschluss entspricht dabei beispielsweise der Übertragung von Rekuperationsleistung eines generatorisch betriebenen E-Motors.

Vorzugsweise ist die Vorrichtung dazu ausgebildet, gleichzeitig elektrische Leistung von dem Leistungsbereitstellungsanschluss und von dem Energiespeicheranschluss zu dem Verbraucheranschluss zu übertragen. So kann vorteilhafterweise eine geforderte Leistungsspitze abgedeckt werden.

Vorzugsweise ist die Vorrichtung dazu ausgebildet, elektrische Leistung von dem Leistungsbereitstellungsanschluss zu dem Energiespeicheranschluss zu übertragen. Auf diese Weise ist es möglich, den Ladezustand eines mit dem Energiespeicheranschluss verbundenen Energiespeichers zu heben.

Vorzugsweise ist die Vorrichtung dazu ausgebildet, gleichzeitig mit der elektrischen Leistungsübertragung von dem Leistungsbereitstellungsanschluss zu dem Energiespeicheranschluss, elektrische Leistung von dem Energiespeicheranschluss zu dem Verbraucheranschluss zu übertragen. Auf diese Weise kann eine Leistungsanforderung am Verbraucheranschluss durch einen elektrischen Energiespeicher, der mit dem Energiespeicheranschluss verbunden ist, abgedeckt werden, wobei ein Leistungsbereitsteller über den Leistungsbereitstellungsanschluss elektrische Energie an den elektrischen Energiespeicher nachführt und diesen somit entlastet.

Vorzugsweise ist die Vorrichtung dazu ausgebildet, dass mit dem Leistungsbereitstellungsanschluss mindestens ein weiterer Leistungsbereitsteller verbunden werden kann, wobei die Schalteinrichtung dazu ausgebildet ist, die direkte Verbindung selektiv mit einzelnen mit dem Leistungsbereitstellungsanschluss verbundenen Leistungsbereitstellern herzustellen. So kann beispielsweise gewählt werden, dass ein bestimmter Leistungsbereitsteller mit dem Verbraucheranschluss und insbesondere mit einem bestimmten Verbraucheranschlussabschnitt verbunden werden soll, um Leistung aus bzw. von diesem Leistungsbereitsteller dorthin zu liefern.

Vorzugsweise ist die Vorrichtung dazu ausgebildet, dass mit dem Energiespeicheranschluss mindestens ein weiterer elektrischer Energiespeicher verbunden werden kann, wobei die Schalteinrichtung dazu ausgebildet ist, die direkte Verbindung selektiv mit einzelnen mit dem Energiespeicheranschluss verbundenen elektrischen Energiespeichern herzustellen. So kann beispielsweise gewählt werden, dass ein bestimmter elektrischer Energiespeicher mit dem Verbraucheranschluss und insbesondere mit einem bestimmten Verbraucheranschlussabschnitt verbunden werden soll, um Leistung aus diesem Energiespeicher dorthin zu liefern. Weiter kann vorgesehen sein, dass eine selektive Energiezufuhr erfolgt, so dass beispielsweise elektrische Leistung an einen oder mehrere bestimmte elektrische Energiespeicher geleitet wird. Beispielsweise kann die Leistung immer dem elektrischen Energiespeicher mit dem vergleichsweise niedrigsten Ladezustand zugeführt werden. Die selektive Energiezufuhr kann vorzugsweise über die Schalteinrichtung realisiert werden.

Vorzugsweise ist die Vorrichtung dazu ausgebildet, dass mit dem Verbraucheranschluss mindestens ein weiterer elektrischer Verbraucher verbunden werden kann, wobei die Schalteinrichtung dazu ausgebildet ist, die direkte Verbindung selektiv mit einzelnen mit dem Verbraucheranschluss verbundenen elektrischen Verbrauchern herzustellen. So kann beispielsweise gewählt werden, dass ein bestimmter elektrischer Verbraucher mit dem Leistungsbereitstellungsanschluss und insbesondere mit einem bestimmten Leistungsbereitstellungsanschlussabschnitt oder mit dem Energiespeicheranschluss und insbesondere mit einem bestimmten Energiespeicheranschlussabschnitt verbunden werden soll, um Leistung von dort zu erhalten.

Vorzugsweise liegt im Ergebnis eine Vorrichtung vor, die dazu ausgebildet ist, in Abhängigkeit von den Schaltzuständen der Schalteinrichtung, eine direkte elektrische Verbindung zwischen dem oder den mit dem Verbraucheranschluss verbundenen Verbraucher oder Verbrauchern und den oder dem mit dem Leistungsbereitstellungsanschluss verbundenen Leistungsbereitstellern oder Leistungsbereitsteller herzustellen bzw. eine direkte elektrische Verbindung zwischen dem oder den mit dem Verbraucheranschluss verbundenen Verbraucher oder Verbrauchern und dem oder den mit dem Energiespeicheranschluss verbundenen elektrischen Energiespeicher oder Energiespeichern herzustellen. Gemäß einer bevorzugten Weiterbildung ist die Schalteinrichtung dazu ausgebildet, entsprechend ihrer Schaltzustände eine Auswahl der direkten Verbindung vorzunehmen. So kann beispielsweise vorgesehen sein, dass eine direkte Verbindung zwischen dem Leistungsbereitstellungsanschluss und einem bestimmten Verbraucher bzw. zwischen dem Energiespeicheranschluss und einem bestimmten Verbraucher besteht. Vorzugsweise ist die Schalteinrichtung dazu ausgebildet, dass ein bestimmter Leistungsbereitsteller gewählt werden kann, der sich dann in einer direkten Verbindung mit allen oder ausgewählten Verbrauchern befindet. Alternativ oder zusätzlich kann vorgesehen sein, dass ein bestimmter elektrischer Energiespeicher gewählt wird, der sich dann in einer direkten Verbindung mit allen oder ausgewählten Verbrauchern befindet. Gemäß einer bevorzugten Weiterbildung kann vorgesehen sein, dass einer oder mehrere elektrische Verbraucher direkt mit einem Leistungsbereitsteller verbunden sind, während ein anderer oder mehrere andere elektrische Verbraucher direkt mit einem elektrischen Energiespeicher verbunden sind.

Erfindungsgemäß ist ein Energieversorgungsystem für ein Fahrzeug vorgesehen, wobei das Energieversorgungsystem folgende Elemente aufweist:
- mindestens einen Leistungsbereitsteller;
- mindestens einen elektrischen Energiespeicher;
- mindestens einen elektrischen Verbraucher; und
- eine Vorrichtung wie oben beschrieben, wobei
   der mindestens eine Leistungsbereitsteller mit dem Leistungsbereitstellungsanschluss der Vorrichtung, der mindestens eine elektrische Energiespeicher mit dem Energiespeicheranschluss der Vorrichtung und der mindestens eine elektrische Verbraucher mit dem Verbraucheranschluss der Vorrichtung verbunden ist.

Leistungsbereitsteller können insbesondere, wie oben beschrieben ausgeführt sein. D.h. sie können eine Brennstoffzelle, ein Photovoltaikpanel und/oder einen Range-Extender umfassen.

Auf diese Weise ist ein Energieversorgungssystem geschaffen, mit dem es möglich ist, elektrische Leistung sowohl von mindestens einem Leistungsbereitsteller als auch von mindestens einem elektrischen Energiespeicher an mindestens einen Verbraucher ohne die eingangs beschriebenen Wandlungsverluste zu übertragen.

Erfindungsgemäß ist ein Fahrzeug mit einer Vorrichtung wie oben beschrieben oder einem vorstehend beschriebenen Energieversorgungssystem vorgesehen. Ein solches Fahrzeug ist vorzugsweise als Nutzfahrzeug ausgebildet.

Nachfolgend wird die Erfindung anhand bevorzugter Ausführungsbeispiele unter Zuhilfenahme der beigefügten Zeichnungen beschrieben.

Im Einzelnen zeigt:
- Fig. 1: eine erfindungsgemäße Vorrichtung gemäß einer ersten Ausführungsform,
- Fig. 2: eine Kombination erfindungsgemäßer Vorrichtungen,
- Fig. 3: eine erfindungsgemäße Vorrichtung gemäß einer zweiten Ausführungsform,
- Fig. 4: eine erfindungsgemäße Vorrichtung gemäß einer dritten Ausführungsform,
- Fig. 5a-d: eine konkrete Ausführungsform der erfindungsgemäßen Vorrichtung mit entsprechenden Leistungsflüssen, und
- Fig. 6a-e: Möglichkeiten, Leitungsverbindungen innerhalb der Vorrichtung zu realisieren.

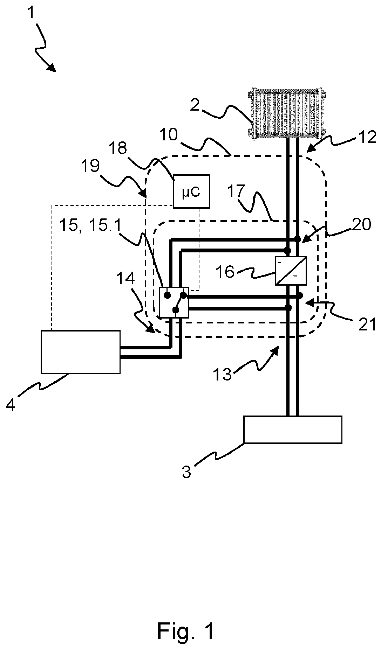

Fig. 1 zeigt eine erfindungsgemäße Vorrichtung gemäß einer ersten Ausführungsform.

Es ist eine Vorrichtung 10 als Teil eines Energieversorgungssystems 1 gezeigt, die einen Leistungsbereitstellungsanschluss 12, einen Energiespeicheranschluss 13 sowie einen Verbraucheranschluss 14 aufweist. Ein Leistungsbereitsteller 2 ist mit dem Leistungsbereitstellungsanschluss 12 verbunden. Ein elektrischer Energiespeicher 3 ist mit dem Energiespeicheranschluss 13 verbunden. Ein elektrischer Verbraucher 4, ist mit dem Verbraucheranschluss 14 verbunden.

In diesem Ausführungsbeispiel ist der Leistungsbereitsteller 2 als Brennstoffzelle ausgebildet. Daher werden nachfolgend die Begriffe "Leistungsbereitsteller" und "Brennstoffzelle" synonym verwendet. Er kann aber auch als ein anderes Aggregat, insbesondere als ein Photovoltaikpanel oder ein Range-Extender, ausgebildet sein.

Die Vorrichtung 10 weist eine Schalteinrichtung 15 auf, die ein Schaltmittel 15.1 in Form eines elektronischen oder elektrischen Schalters umfasst bzw. in dieser einfachen Ausführung der Schalteinrichtung 15 mit dem Schaltmittel 15.1 identisch ist. Ferner weist die Vorrichtung 10 einen Spannungswandler 16 auf. Der Spannungswandler 16 ist zwischen dem Leistungsbereitstellungsanschluss 12 und dem Energiespeicheranschluss 13 angeordnet und als DC-DC-Wandler ausgeführt. Über den Spannungswandler 16 kann elektrische Leistung von dem Leistungsbereitstellungsanschluss 12 zu dem Energiespeicheranschluss 13 geleitet werden.

In der gezeigten Darstellung sind das Schaltmittel 15.1 und der Spannungswandler 16 zu einem Schaltmodul 17 zusammengefasst. D.h. sie können baulich als Einheit ausgeführt sein, so dass die Leitungen, die sich innerhalb des Schaltmoduls 17 befinden, verkürzt ausgebildet sind oder gänzlich entfallen können. Aus Gründen der Übersichtlichkeit wird in den weiteren Figuren auf die Darstellung des Schaltmoduls 17 verzichtet. Es kann jedoch in allen Ausführungsformen optional vorgesehen sein, dass ein Spannungswandler mit mindestens einem Schaltmittel zu einem solchen Schaltmodul zusammengefasst ist.

Das Schaltmittel 15.1 ist sowohl mit dem Leistungsbereitstellungsanschluss 12, dem Energiespeicheranschluss 13 als auch mit dem Verbraucheranschluss 14 verbunden. Die entsprechenden Verbindungsleitungen sind als Linien dargestellt. Dabei ist ein Verzweigungspunkt 20 auf der Verbindungsleitung zwischen dem Leistungsbereitstellungsanschluss 12 und dem Spannungswandler 16 vorgesehen, der mit dem Schaltmittel 15.1 verbunden ist. Ein weiterer Verzweigungspunkt 21 ist auf der Verbindungsleitung zwischen dem Energiespeicheranschluss 13 und dem Spannungswandler 16 vorgesehen. Auch der Verzweigungspunkt 21 ist mit dem Schaltmittel 15.1 verbunden.

Das Schaltmittel 15.1 weist einen ersten Schaltzustand auf. In diesem ersten Schaltzustand verbindet das Schaltmittel 15.1 den Leistungsbereitstellungsanschluss 12 über den Verzweigungspunkt 20 direkt mit dem Verbraucheranschluss 14. Somit ist eine direkte Leistungsübertragung vom Leistungsbereitstellungsanschluss 12 zum Verbraucheranschluss 14 möglich, d.h. Schaltverluste durch den Spannungswandler 16 werden vermieden. In diesem ersten Schaltzustand ist zudem eine Leistungsübertragung von dem Energiespeicheranschluss 13 zu dem Verbraucheranschluss 14 über den Spannungswandler 16 möglich.

Das Schaltmittel 15.1 weist einen zweiten Schaltzustand auf. In diesem zweiten Schaltzustand verbindet das Schaltmittel 15.1 den Energiespeicheranschluss 13 über den Verzweigungspunkt 21 direkt mit dem Verbraucheranschluss 14. Somit ist eine direkte Leistungsübertragung vom Energiespeicheranschluss 13 zum Verbraucheranschluss 14 möglich, d.h. Schaltverluste durch den Spannungswandler 16 werden vermieden. In diesem zweiten Schaltzustand ist zudem eine Leistungsübertragung von dem Leistungsbereitstellungsanschluss 12 zu dem Verbraucheranschluss 14 über den Spannungswandler 16 möglich.

Die Vorrichtung 10 ist somit in der Lage, Leistung zwischen den Anschlüssen 12, 13 und 14 zu verteilen und insbesondere zu ermöglichen, Verluste, die durch den Spannungswandler 16 verursacht sind, zu vermeiden. Gleichzeitig ist es möglich, Leistung von dem nicht direkt mit dem Verbraucheranschluss 14 verbundenen Anschluss 12, 13 über den Spannungswandler 16 und das Schaltmittel 15.1 zur Unterstützung an den Verbraucheranschluss 14 zu übertragen. Ferner ist eine Leistungsübertragung von dem Leistungsbereitstellungsanschluss 12 zu dem Energiespeicheranschluss 13 über den Spannungswandler 16 möglich.

Um die Schalteinrichtung 15 anzusteuern ist optional ein Steuermittel 18 vorgesehen, das über eine optionale Informationsschnittstelle 19 der Vorrichtung 10 Informationen von dem Verbraucher 4 erhält. Dies können beispielsweise Leistungsbedarf des Verbrauchers 4 oder eine allgemeine Zustandsinformation sein. Das Steuermittel 18 kann auch zur Ansteuerung der Schalteinrichtungen der Vorrichtungen 10 der weiteren Zeichnungen vorgesehen sein, ist dort aber aus Gründen der Übersichtlichkeit weggelassen worden. Weist diese oder die Vorrichtungen 10 der weiteren Zeichnungen kein Steuermittel 18 auf, so kann die Vorrichtung 10 eine Steuerschnittstelle aufweisen, über die ein nicht zur Vorrichtung 10 zählendes Steuermittel 18 Zugriff auf die Schalteinrichtung 15 zu deren Ansteuerung hat.

Ein Vorteil ergibt sich, wenn die Vorrichtung 10 modular ausgeführt ist. Dadurch liegt die Vorrichtung 10 als Ganzes als Bauteil zur Montage oder Wartung vor und es liegen Leitungen verkürzt vor oder können komplett eingespart sein. So sind das Schaltmittel 15.1 und der Spannungswandler 16 vorteilhafterweise räumlich zusammenliegend als Schaltmodul 17 ausgeführt, so dass die Leitung zwischen dem Verzweigungspunkt 20 und dem Schaltmittel 15.1 und/oder zwischen dem Verzweigungspunkt 21 und dem Schaltmittel 15.1 im Optimalfall auch komplett entfallen können/kann oder zumindest verkürzt sind/ist. Ein entsprechendes Energieversorgungssystem 1, das die hier beschriebene Vorrichtung 10 aufweist, benötigt dann lediglich Verbindungen zu den Anschlüssen 12, 13 und 14. Es müssen jedoch keine weiteren Leitungen verwendet werden, da diese elektrischen Verbindungswege innerhalb der Vorrichtung 10 verlaufen.

Ein weiterer Vorteil ist, dass der Verbraucher 4 auch dauerhaft direkt mit dem elektrischen Energiespeicher 3 verbunden werden kann. So kann beispielsweise bei Fehlfunktion oder Ausfall des Leistungsbereitstellers 2 über das Schaltmittel 15.1 eine dauerhafte direkte Verbindung zwischen dem Verbraucheranschluss 14 und dem Energiespeicheranschluss 13 hergestellt werden, so dass der Verbraucher 4 ohne Verluste des Spannungswandlers 16 betrieben werden kann.

Bei dem in Fig. 1 dargestellten Ausführungsbeispiel handelt es sich um eine Vorrichtung 10, die bevorzugt über den Verbraucheranschluss 14 mit einem Inverter als Verbraucher 4 verbunden ist, der Teil der Luftversorgung der Brennstoffzelle 2 ist. Ein solcher Inverter liefert den Wechselstrom, der benötigt wird, um einen Kompressor zu betreiben, der die Brennstoffzelle 2 mit einem Luftstrom versorgt. Gerade in der Startphase des Fahrzeugs, d.h. wenn noch kein Luftstrom durch die Brennstoffzelle 2 strömt, kann Leistung aus dem elektrischen Energiespeicher 3 über den Energiespeicheranschluss 13 direkt an den Verbraucheranschluss 14 und den damit verbundenen Verbraucher 4, d.h. an den Inverter, geliefert werden, so dass der Luftstrom für die Brennstoffzelle 2 ohne Verluste des Spannungswandlers 16 erzeugt werden kann. Dafür ist das Schaltmittel 15.1 in den zweiten Schaltzustand geschaltet, in dem es den Energiespeicheranschluss 13 direkt mit dem Verbraucheranschluss 14 verbindet.

Der Verbraucher 4 kann alternativ oder zusätzlich auch einen E-Motor umfassen.

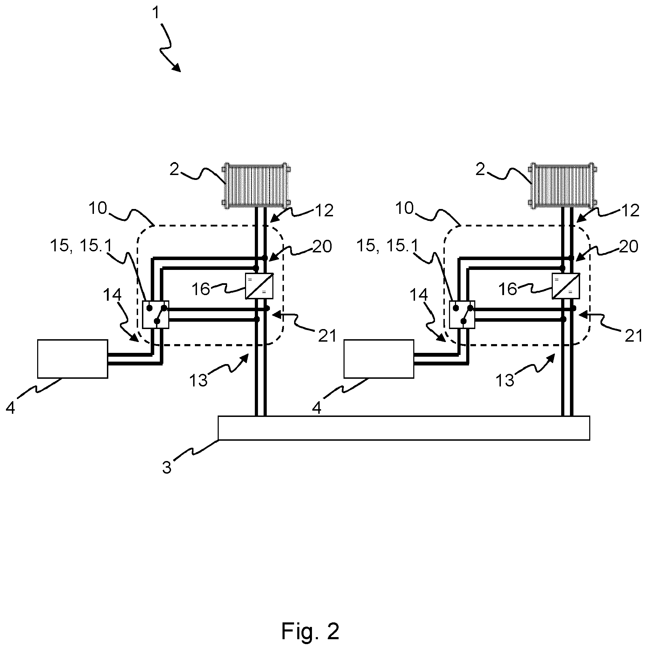

Fig. 2 zeigt eine Kombination erfindungsgemäßer Vorrichtungen.

Dieser Aufbau zeigt eine kombinierte Verwendung zweier Vorrichtungen 10, wie sie in Fig. 1 gezeigt ist. Daher sind dieselben Bezugszeichen wie bei Fig.1 in Verwendung und es wird hinsichtlich der Beschreibung der Vorrichtungen 10 auf die entsprechende Beschreibung zu Fig. 1 verwiesen.

In diesem Ausführungsbeispiel ist jede der Vorrichtungen 10 mit dem jeweiligen Leistungsbereitstellungsanschluss 12 mit einem separaten Leistungsbereitsteller 2 verbunden. Ferner sind die Vorrichtungen 10 mit den jeweiligen Verbraucheranschlüssen 14 mit einem separaten Verbraucher 4 verbunden. Die Energiespeicheranschlüsse 13 der Vorrichtungen 10 sind hingegen mit demselben elektrischen Energiespeicher 3 verbunden. Alternativ kann auch vorgesehen sein, dass die Energiespeicheranschlüsse 13 mit separaten elektrischen Energiespeichern 3 verbunden sind.

In diesem Ausführungsbeispiel sind die Leistungsbereitsteller 2 als Brennstoffzellen ausgebildet. Daher werden nachfolgend die Begriffe "Leistungsbereitsteller" und "Brennstoffzelle" synonym verwendet. Mindestens einer der Leistungsbereitsteller kann aber auch als ein anderes Aggregat, insbesondere als ein Photovoltaikpanel oder ein Range-Extender, ausgebildet sein.

Diese Kombination von zwei oder auch mehr Vorrichtungen 10 erlaubt den getrennten oder auch redundanten Betrieb der Brennstoffzellen 2, wobei die Zahl bzw. die Länge der verwendeten Leitungen zwischen dem Schaltmittel 15.1 und dem Verzweigungspunkt 20 und/oder dem Schaltmittel 15.1 und dem Verzweigungspunkt, 21 bei entsprechender modularer Ausbildung reduziert werden kann, wie zu Fig. 1 besch rieben.

Fällt ein Leistungsbereitsteller 2 aus oder weist eine Fehlfunktion auf, kann der elektrische Energiespeicher 3 direkt Leistung an den jeweiligen Verbraucheranschluss 14 liefern, indem das jeweilige Schaltmittel 15.1 in den zweiten Schaltzustand geschaltet wird und so den Energiespeicheranschluss 13 direkt mit dem Verbraucheranschluss 14 verbindet.

Auch hier kann es sich, wie oben beschrieben, bei den Verbrauchern 4 um einen Inverter der Luftversorgung der jeweiligen Brennstoffzelle 2 handeln, der den Wechselstrom zum Betrieb des Kompressor erzeugt, um die jeweilige Brennstoffzelle 2 mit einem Luftstrom zu versorgen. So kann auch hier insbesondere in der Startphase des Fahrzeugs ein Luftstrom für die Brennstoffzelle 2 ohne Wandlungsverluste erzeugt werden.

Der Verbraucher 4 kann hier auch alternativ oder zusätzlich einen E-Motor umfassen.

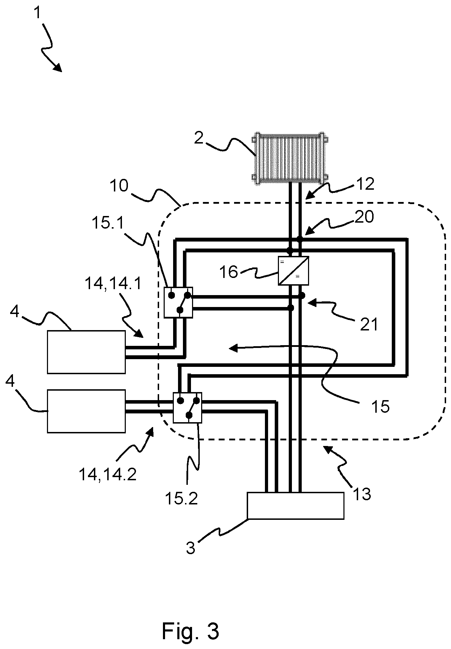

Fig. 3 zeigt eine erfindungsgemäße Vorrichtung gemäß einer zweiten Ausführungsform. Diese basiert im Wesentlichen auf der Vorrichtung 10, die in Fig. 1 gezeigt ist. Daher wird ergänzend auch hinsichtlich des Energieversorgungssystems 1 auf die obige Beschreibung verwiesen.

In diesem Ausführungsbeispiel ist der Leistungsbereitsteller 2 als Brennstoffzelle ausgebildet. Daher werden nachfolgend die Begriffe "Leistungsbereitsteller" und "Brennstoffzelle" synonym verwendet. Der Leistungsbereitsteller kann aber auch als ein anderes Aggregat, insbesondere als ein Photovoltaikpanel oder ein Range-Extender, ausgebildet sein.

Der Verbraucheranschluss 14 weist nun zwei Verbraucheranschlussabschnitte 14.1 und 14.2 auf, die jeweils mit einem Verbraucher 4 verbunden sind. Neben dem Schaltmittel 15.1 weist die Schalteinrichtung 15 ein weiteres Schaltmittel 15.2 auf. Das weitere Schaltmittel 15.2 ist so angeordnet, dass es, gemäß einem ersten Schaltzustand, unabhängig vom ersten Schaltmittel 15.1 eine direkte Verbindung zwischen dem Leistungsbereitstellungsanschluss 12 und dem weiteren Verbraucheranschlussabschnitt 14.2 herstellen kann, der unabhängig vom Verbraucheranschlussabschnitt 14.1 ist. Gemäß einem zweiten Schaltzustand kann das weitere Schaltmittel 15.2 eine direkte Verbindung zwischen dem Energiespeicheranschluss 13 und dem Verbraucheranschlussabschnitt 14.2 herstellen.

Auf diese Weise ist es möglich, eine wahlweise Versorgung des Verbrauchers 4, der mit dem zweiten Verbraucheranschlussabschnitt 14.2 verbunden ist, durch die Brennstoffzelle 2 oder aus dem elektrischen Energiespeicher 3 vorzunehmen. Eine Versorgung des elektrischen Energiespeichers 3 durch die Brennstoffzelle 2 ist möglich, indem Leistung über den Spannungswandler 16 von dem Leistungsbereitstellungsanschluss 12 zu dem Energiespeicheranschluss 13 übertragen wird.

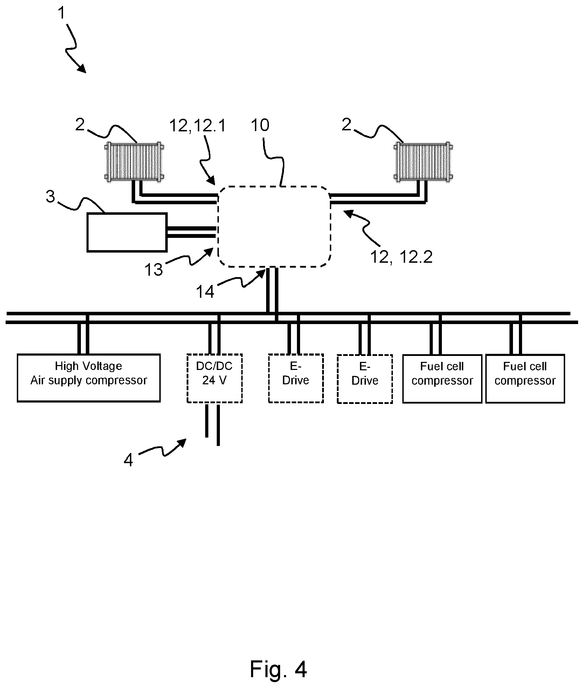

**Fig. 4** zeigt eine erfindungsgemäße Vorrichtung gemäß einer dritten Ausführungsform.

In diesem Ausführungsbeispiel sind die Leistungsbereitsteller 2 als Brennstoffzellen ausgebildet. Daher werden nachfolgend die Begriffe "Leistungsbereitsteller" und "Brennstoffzelle" synonym verwendet. Mindestens einer der Leistungsbereitsteller kann aber auch als ein anderes Aggregat, insbesondere als ein Photovoltaikpanel oder ein Range-Extender, ausgebildet sein.

Hier ist eine Vorrichtung 10 eines Energieversorgungssystems 1 zur elektrischen Leistungsübertragung gezeigt, die mit zwei Leistungsbereitstellern 2 verbunden ist, die über jeweilige Leistungsbereitstellungsanschlussabschnitte 12.1 und 12.2 des Leistungsbereitstellungsanschlusses 12 mit der Vorrichtung 10 verbunden sind. Der Energiespeicheranschluss 13 ist mit einem elektrischen Energiespeicher 3 verbunden. Der Verbraucheranschluss 14 ist mit einem elektrischen Verbraucher 4 in Form eines Hochvoltbordnetzes verbunden.

Exemplarisch und nicht beschränkend für die Erfindung sind hier unterschiedliche Hochvoltkomponenten des Fahrzeugs aufgeführt, wie beispielsweise ein Kompressor, und ein E-Motor bzw. E-Antrieb. Ferner kann auch über einen Spannungswandler ein weiteres Bordnetz, wie beispielsweise ein 24V-Bordnetz mit dem Verbraucheranschluss 14 verbunden sein.

Die Vorrichtung 10 ist mittels einer nicht gezeigten Schalteinrichtung dazu ausgebildet, elektrische Leistung zwischen den Leistungsbereitstellern 2, dem elektrischen Energiespeicher 3 und dem Verbraucheranschluss 14 zu verteilen. Dabei sind Schaltzustände der Schalteinrichtung vorgesehen, die eine direkte Verbindung zwischen den Leistungsbereitstellungsanschlussabschnitten 12.1, 12.2 und dem Verbraucheranschluss 14 bzw. zwischen dem Energiespeicheranschluss 13 und dem Verbraucheranschluss 14 erlauben, so dass ein nicht gezeigter Spannungswandler der Vorrichtung 10 umgangen werden kann, um Wandlungsverluste bei der Leistungsübertragung zu vermeiden.

Da die Vorrichtung 10 lediglich die Anschlüsse 12, 13 und 14 aufweist und Verzweigungsleitungen innerhalb der Vorrichtung 10 vorgehsehen sind, ermöglicht auch dieses Layout, eine Reduzierung von elektrischen Leitungen.

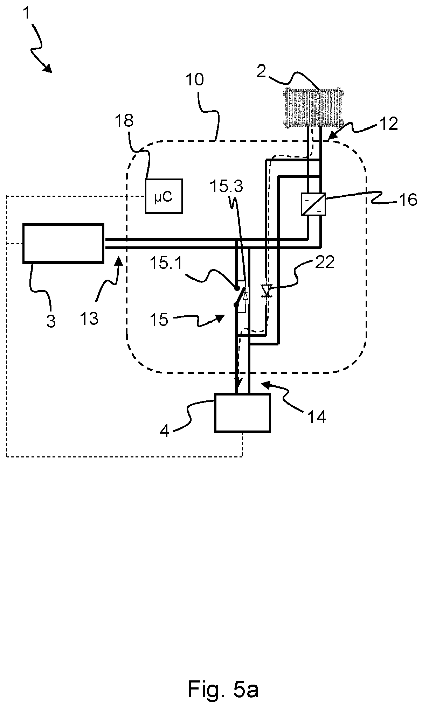

**Fig. 5a****-d** zeigen eine konkrete Ausführungsform der erfindungsgemäßen Vorrichtung mit entsprechenden Leistungsflüssen.

In diesem Ausführungsbeispiel ist der Leistungsbereitsteller 2 als Brennstoffzelle ausgebildet. Daher werden nachfolgend die Begriffe "Leistungsbereitsteller" und "Brennstoffzelle" synonym verwendet. Der Leistungsbereitsteller kann aber auch als ein anderes Aggregat, insbesondere als ein Photovoltaikpanel oder ein Range-Extender, ausgebildet sein.

In **Fig. 5a** ist eine Vorrichtung 10 eines Energieversorgungssystems 1 gezeigt, die über einen Leistungsbereitstellungsanschluss 12 mit einem Leistungsbereitsteller 2 verbunden ist. Ein elektrischer Energiespeicher 3 ist über einen Energiespeicheranschluss 13 mit der Vorrichtung 10 verbunden. Mit einem Verbraucheranschluss 14 ist ein elektrischer Antrieb des Fahrzeugs mit einem E-Motor als Verbraucher 4 verbunden. Der Leistungsbereitsteller 2 liefert dabei eine Leistung mit einem ersten Spannungsniveau, das geringer ist als das Spannungsniveau des elektrischen Energiespeichers 3.

Zwischen Verbraucheranschluss 14 und Leistungsbereitstellungsanschluss 12 besteht eine direkte Verbindung über eine Diode 22. Zwischen dem Leistungsbereitstellungsanschluss 12 und dem Energiespeicheranschluss 13 ist ein Spannungswandler 16 vorgesehen, der als DC-DC-Wandler ausgeführt ist. Zwischen dem Energiespeicheranschluss 13 und dem Verbraucheranschluss 14 ist eine Schalteinrichtung 15 mit einem Schaltmittel 15.1 vorgesehen. Das Schaltmittel 15.1 weist zwei Schaltzustände auf. Ist es wie gezeigt geöffnet, d.h. in seinem ersten Schaltzustand, so ist die Verbindung vom Energiespeicheranschluss 13 zum Verbraucheranschluss 14 getrennt und es kann keine Leistung dahin übertragen werden. Die Schalteinrichtung 15 weist eine Rücklaufdiode 15.3 auf, die jedoch eine Leistungsübertragung vom Verbraucheranschluss 14 zu dem Energiespeicheranschluss 13 auch bei geöffnetem Schaltmittel 15.1 erlaubt. Gemäß dem zweiten Schaltzustand des Schaltmittels 15.1 stellt das Schaltmittel 15.1 eine Verbindung zwischen dem Verbraucheranschluss 14 und dem Energiespeicheranschluss 13 her, so dass auch eine Leistungsübertragung zu dem Verbraucheranschluss 14 von dem Energiespeicheranschluss 13 möglich ist.

Einen ersten möglichen Leistungsfluss zeigt Fig. 5a. Hier wird der elektrische Verbraucher 4 durch die Brennstoffzelle 2 betrieben, wie über den gestrichelten Verlaufspfeil angedeutet ist. D.h. es wird elektrische Leistung ausschließlich von der Brennstoffzelle 2 über die Diode 22 zum Verbraucheranschluss 14 geliefert, um den Verbraucher 4 zu betreiben. Da das Schaltmittel 15.1 in seinem ersten Schaltzustand ist, ist die elektrische Verbindung zwischen Energiespeicheranschluss 13 und Verbraucheranschluss 14 unterbrochen.

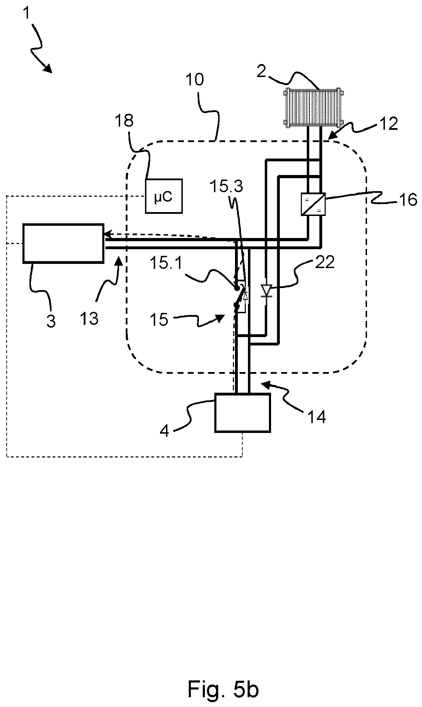

**Fig. 5b** zeigt wie die Vorrichtung 10 in diesem Schaltzustand zur Rekuperation betrieben werden kann. Befindet sich das Fahrzeug im Schubbetrieb, so wird der E-Motor, also der Verbraucher 4, generatorisch betrieben und liefert elektrische Leistung über den Verbraucheranschluss 14 und die Rücklaufdiode 15.3 an den Energiespeicheranschluss 13 und somit den elektrischen Energiespeicher 3, der die Leistung aufnimmt und als elektrische Energie speichert. Das Schaltmittel 15.1 bleibt dazu im ersten Schaltzustand. Es ist also elektrisches Fahren rein durch Leistung der Brennstoffzelle 2 möglich, wobei Rekuperationsenergie im elektrischen Energiespeicher 3 gespeichert werden kann. Auch hier ist der Leistungsverlauf gestrichelt gezeichnet.

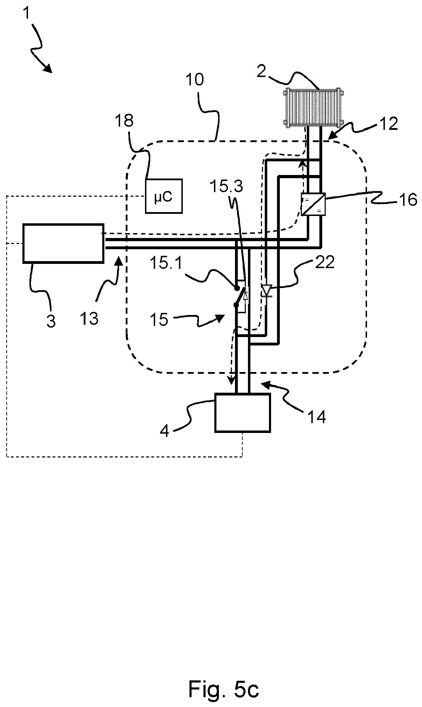

**Fig. 5c** zeigt wie bei dem ersten Schaltzustand des Schaltmittels 15.1 ein Boost-Betrieb durch den elektrischen Energiespeicher 3 ermöglicht wird. Zwar kann elektrische Leistung nicht direkt von dem elektrischen Energiespeicher 3 zu dem Verbraucheranschluss 14 übertragen werden, da die direkte Verbindung durch das geöffnete Schaltmittel 15.1 unterbrochen ist, allerdings kann elektrische Leistung des elektrischen Energiespeichers 3 über den Spannungswandler 16 geleitet werden und somit dem Spannungsniveau der Brennstoffzelle 2 angepasst werden. Anschließend wird die elektrische Leistung dann entsprechend dem gestrichelt eingezeichneten Leistungsverlauf über die Diode 22 und den Verbraucheranschluss 14 schließlich dem Verbraucher 4 zugeführt, der nun eine gegenüber der Leistung der Brennstoffzelle 2 erhöhte Leistung erhält.

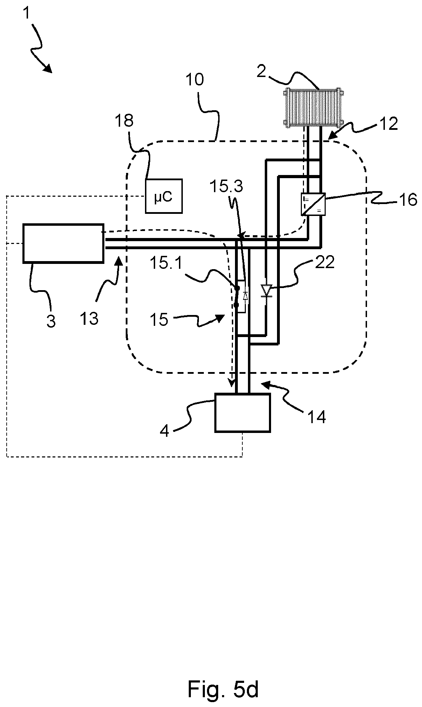

**Fig. 5d** zeigt Leistungsflüsse, die bei dem zweiten Schaltzustand des Schaltmittels 15.1 vorliegen können. Hier besteht eine direkte Verbindung zwischen dem Energiespeicheranschluss 13 und dem Verbraucheranschluss 14, da das Schaltmittel 15.1 nun geschlossen, also in seinem zweiten Schaltzustand, ist. Somit kann elektrische Leistung von dem elektrischen Energiespeicher 3 über den Energiespeicheranschluss 13, das Schaltmittel 15.1 und den Verbraucheranschluss 14 an den Verbraucher 4 geleitet werden, wie der entsprechende gestrichelte Leistungsverlauf zeigt. In diesem Betriebszustand wird elektrische Leistung von der Brennstoffzelle 2 aufgrund des gegenüber dem Spannungsniveau des elektrischen Energiespeichers 3 niedrigeren Spannungsniveaus nicht über die Diode 22 und damit zum Verbraucheranschluss 14 übertragen. Stattdessen kann jedoch ein Boost-Betrieb aus der Brennstoffzelle 2 durchgeführt werden, indem elektrische Leistung vom Brennstoffzellenanschluss 12 über den Spannungswandler 16 und das geschlossene Schaltmittel 15.1 geführt wird, wie der wie der entsprechende gestrichelte Leistungsverlauf zeigt.

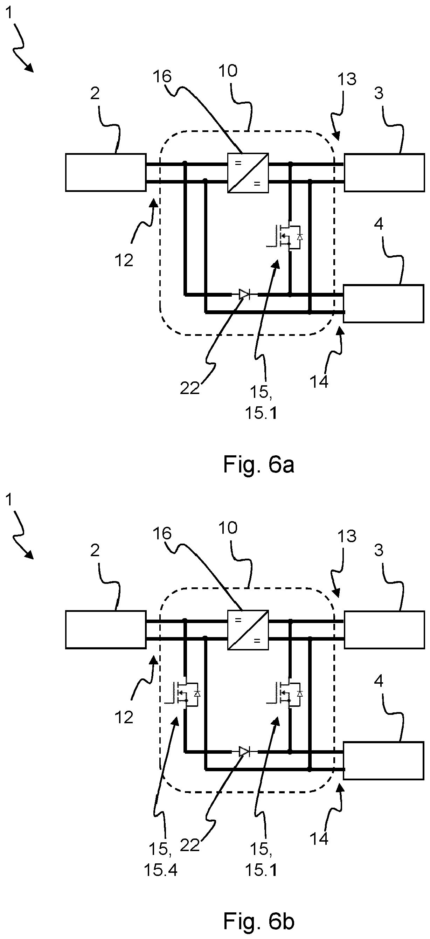

**Fig. 6a****-e** zeigen Möglichkeiten, Leitungsverbindungen innerhalb der Vorrichtung zu realisieren.

In **Fig. 6a** ist ein Leistungsbereitsteller 2 gezeigt, der mit dem Leistungsbereitstellungsanschluss 12 einer Vorrichtung 10 eines Energieversorgungssystems 1 verbunden ist. Mit einem Energiespeicheranschluss 13 der Vorrichtung 10 steht ein elektrischer Energiespeicher 3 in Verbindung. Mit einem Verbraucheranschluss 14 der Vorrichtung 10 ist ein elektrischer Verbraucher 4 verbunden. Zwischen dem Leistungsbereitstellungsanschluss12 und dem Energiespeicheranschluss 13 ist ein Spannungswandler 16 angeordnet, der beide Anschlüsse 12, 13 miteinander verbindet.

Ferner weist die Vorrichtung 10 eine Schalteinrichtung 15 mit einem Schaltmittel 15.1 auf, das dazu ausgebildet ist, den Energiespeicheranschluss 13 direkt mit dem Verbraucheranschluss 14 zu verbinden (zweiter Schaltzustand) oder zu trennen (erster Schaltzustand).

Schließlich kann noch eine Diode 22 zwischen dem Leistungsbereitstellungsanschluss12 und dem Verbraucheranschluss 14 vorgesehen sein, die einen Rückfluss elektrischer Leistung vom Verbraucheranschluss 14 zum Leistungsbereitstellungsanschluss12 verhindert.

In diesem Ausführungsbeispiel ist der Leistungsbereitsteller 2 als Brennstoffzelle ausgebildet. Daher werden nachfolgend die Begriffe "Leistungsbereitsteller" und "Brennstoffzelle" synonym verwendet. Der Leistungsbereitsteller kann aber auch als ein anderes Aggregat, insbesondere als ein Photovoltaikpanel oder ein Range-Extender, ausgebildet sein.

Die hier gezeigte Leitungsverbindung eignet sich besonders für eine Konfiguration, bei der die Spannung der Brennstoffzelle 2 geringer als die Spannung des elektrischen Energiespeichers 3 ist. Wird das Schaltmittel 15.1 in den ersten Schaltzustand geschaltet, so ist die Verbindung zwischen Energiespeicheranschluss 13 und Verbraucheranschluss 14 getrennt. In diesem Fall kann elektrische Leistung direkt von der Brennstoffzelle 2 über den Leistungsbereitstellungsanschluss 12 und den Verbraucheranschluss 14 an den elektrischen Verbraucher 4 übertragen werden. Leistung von dem elektrischen Energiespeicher 3 kann mit Verlusten behaftet über den Energiespeicheranschluss 13, den Spannungswandler 16 und den Verbraucheranschluss 14 an den elektrischen Verbraucher 4 übertragen werden. Dies ist insbesondere dann der Fall, wenn die Leistung der Brennstoffzelle 2 alleine nicht für den Betrieb des Verbrauchers 4 ausreicht.

Wird das Schaltmittel 15.1 in den zweiten Schaltzustand geschaltet, so verbindet es den Energiespeicheranschluss 13 direkt mit dem Verbraucheranschluss 14. Gleichzeitig besteht eine Leitungsverbindung zwischen dem Leistungsbereitstellungsanschluss12 und dem Verbraucheranschluss 14. Da die Spannung des elektrischen Energiespeichers 3 höher als die der Brennstoffzelle 2 ist, wird jedoch lediglich die Leistung des elektrischen Energiespeichers 3 an den Verbraucheranschluss 14 und somit an den Verbraucher 4 übertragen. Dabei verhindert die Diode 22 einen Leistungsrückfluss hin zum Leistungsbereitstellungsanschluss12. Leistung der Brennstoffzelle 2 kann dennoch vom Leistungsbereitstellungsanschluss12 mit Verlusten behaftet über den Spannungswandler 16 an den Verbraucheranschluss 14 und damit an den Verbraucher 4 übertragen werden.

Fig. 6b zeigt eine Weiterbildung der Ausführungsform von Fig. 6a.

Hier ist die Vorrichtung 10 aus Fig. 6a bzw. die Schalteinrichtung 15 um ein weiteres Schaltmittel 15.4 ergänzt. Dieses ist zwischen dem Leistungsbereitstellungsanschluss12 und dem Verbraucheranschluss 14 vorgesehen und dazu ausgebildet, die Verbindung zwischen dem Leistungsbereitstellungsanschluss12 und dem Verbraucheranschluss 14 in Abhängigkeit vom Schaltzustand des Schaltmittels 15.1 zu verbinden bzw. zu trennen und bei bestehender Verbindung den Spannungswandler 16 zu umgehen. D.h., ist das Schaltmittel 15.1 in seinem ersten Schaltzustand und trennt es damit den Energiespeicheranschluss 13 von dem Verbraucheranschluss 14, so befindet sich das Schaltmittel 15.4 gleichzeitig in seinem ersten Schaltzustand, in dem es den Leistungsbereitstellungsanschluss12 mit dem Verbraucheranschluss 14 direkt verbindet. Die ersten Schaltzustände der Schaltmittel 15.1 und 15.4 entsprechen in dieser Ausführungsform dem ersten Schaltzustand der Schalteinrichtung 15 der Vorrichtung 10.

Der zweite Schaltzustand der Schalteinrichtung 15 wird durch die zweiten Schaltzustände der Schaltmittel 15.1 und 15.4 realisiert. Dies bedeutet, dass das Schaltmittel 15.1 die Verbindung zwischen dem Energiespeicheranschluss 13 und dem Verbraucheranschluss 14 herstellt und das Schaltmittel 15.4 die direkte Verbindung zwischen dem Leistungsbereitstellungsanschluss12 und dem Verbraucheranschluss 14 trennt.

Diese Ausführungsform ist geeignet für Konfigurationen, bei denen das Spannungsniveau der Brennstoffzelle 2 höher oder niedriger ist als das Spannungsniveau des elektrischen Energiespeichers 3. Durch die aktive Trennung der Anschlüsse 12, 13 und 14 entsprechend den Schaltzuständen der Schalteinrichtung 15 ist in jedem Schaltzustand der Schalteinrichtung 15 lediglich eine direkte Verbindung zum Verbraucheranschluss 14 hergestellt. D.h. gemäß dem ersten Schaltzustand der Schalteinrichtung 15 kann elektrische Leistung direkt von dem Leistungsbereitstellungsanschluss12 zu dem Verbraucheranschluss 14 über das Schaltmittel 15.4 übertragen werden, wohingegen elektrische Leistung von dem Energiespeicheranschluss 13 über den Spannungswandler 16 und das Schaltmittel 15.4 zu dem Verbraucheranschluss 14 übertragen werden kann. Gemäß dem zweiten Schaltzustand der Schalteinrichtung 15 kann elektrische Leistung direkt von dem Energiespeicheranschluss 13 über das Schaltmittel 15.1 zu dem Verbraucheranschluss 14 übertragen werden, wohingegen elektrische Leistung von dem Brennstoffzellenanschluss 12 über den Spannungswandler 16 und über das Schaltmittel 15.1 zu dem Verbraucheranschluss 14 übertragen werden kann.

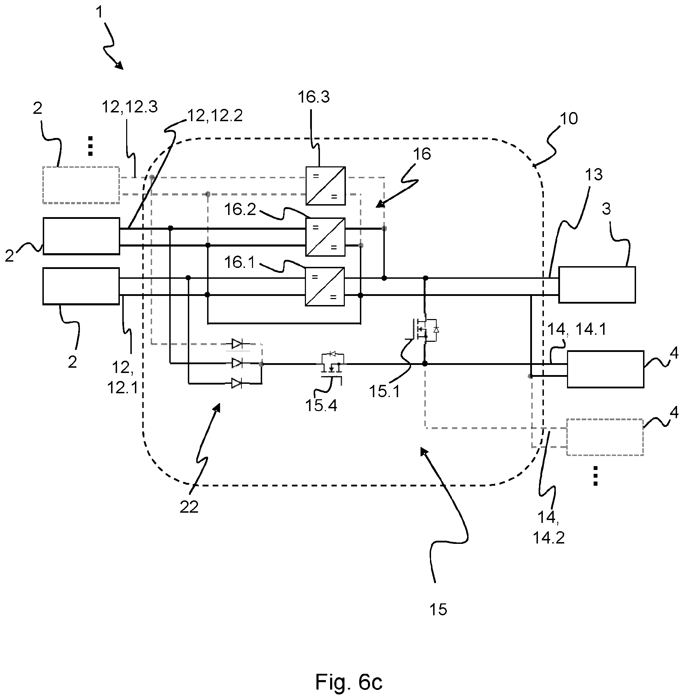

Fig. 6c zeigt eine Vorrichtung, die mit mehreren Leistungsbereitstellern und mehreren elektrischen Verbrauchern verbunden ist.

Die Vorrichtung 10 eines Energieversorgungssystems 1 weist einen Leistungsbereitstellungsanschluss 12 mit mehreren Leistungsbereitstellungsanschlussabschnitten 12.1, 12.2, 12.3 auf, die jeweils mit einem Leistungsbereitsteller 2 verbunden sind. Jedem Leistungsbereitstellungsanschlussabschnitt 12.1, 12.2, 12.3 ist ein separater Spannungswandler 16.1, 16.2, 16.3 eines Spannungswandlers 16 zugeordnet. Die Spannungswandler 16.1, 16.2, 16.3 sind zwischen dem jeweiligen Leistungsbereitstellungsanschlussabschnitt 12.1, 12.2, 12.3 und dem Energiespeicheranschluss 13 angeordnet an dem ein elektrischer Energiespeicher 3 angeschlossen ist. D.h. elektrische Leistung kann zwischen dem Energiespeicheranschluss 13 und den Leistungsbereitstellungsanschlussabschnitten 12.1, 12.2, 12.3 über die Spannungswandler 16.1, 16.2, 16.3 übertragen werden.

Die Schalteinrichtung 15 der Vorrichtung 10 weist ein Schaltmittel 15.1 und ein Schaltmittel 15.4 auf. Das Schaltmittel 15.1 arbeitet dabei vergleichbar zu dem Schaltmittel 15.1 das in Fig. 6b gezeigt ist. Gemäß einem ersten Schaltzustand des Schaltmittels 15.1 ist es möglich, den Energiespeicheranschluss 13 von dem Verbraucheranschluss 14 bzw. den Verbraucheranschlussabschnitten 14.1, 14.2 zu trennen. D.h. es besteht dann keine direkte Verbindung. Gleichzeitig ist gemäß einem ersten Schaltzustand über das Schaltmittel 15.4 möglich, eine direkte Verbindung zwischen den Leistungsbereitstellungsanschlussabschnitten 12.1, 12.2, 12.3 und dem Verbraucheranschluss 14 bzw. den Verbraucheranschlussabschnitten 14.1, 14.2 herzustellen. Der erste Schaltzustand der Schalteinrichtung 15 ist durch die ersten Schaltzustände der Schaltmittel 15.1 und 15.4 realisiert. Der zweite Schaltzustand der Schalteinrichtung 15 ist durch die zweiten Schaltzustände der Schaltmittel 15.1 und 15.4 realisiert. Hierbei wird der Energiespeicheranschluss 13 mit dem Verbraucheranschluss 14 bzw. den Verbraucheranschlussabschnitten 14.1, 14.2 über das Schaltmittel 15.1 verbunden und die Leistungsbereitstellungsanschlussabschnitte 12.1, 12.2, 12.3 werden durch das Schaltmittel 15.4 von dem Verbraucheranschluss 14 bzw. den Verbraucheranschlussabschnitten 14.1, 14.2 getrennt.

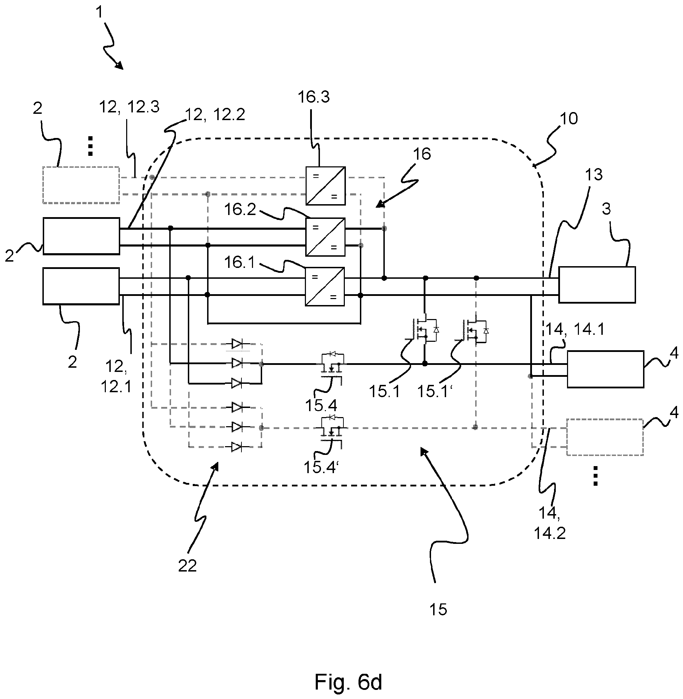

Fig. 6d zeigt eine Weiterentwicklung der in Fig. 6c gezeigten Ausführungsform. Hier weist die Schalteinrichtung 15 weitere Schaltmittel 15.1' und 15.4' auf. Diese sind jeweils dem Verbraucheranschlussabschnitt 14.2 zugeordnet, während die Schaltmittel 15.1 und 15.4 dem Verbraucheranschlussabschnitt 14.1 zugeordnet sind. Auf diese Weise ist es möglich, die Verbraucheranschlussabschnitte 14.1 und 14.2 wahlweise mit dem Leistungsbereitstellungsanschluss 12 bzw. den Leistungsbereitstellungsanschlussabschnitten 12.1, 12.2, 12.3 oder dem Energiespeicheranschluss 13 zu verbinden.

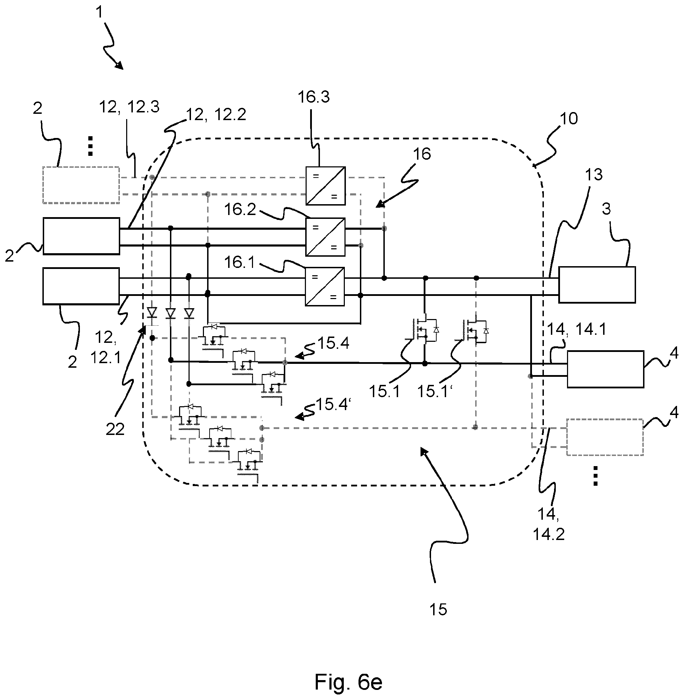

Fig. 6e zeigt darüber hinaus eine Weiterbildung der in Fig. 6d gezeigten Vorrichtung. Hier sind die Schaltmittel 15.4 und 15.4' so unterteilt, dass, wenn eine direkte Verbindung zwischen Leistungsbereitstellungsanschluss 12 bzw. den Leistungsbereitstellungsanschlussabschnitten 12.1, 12.2, 12.3 und den Verbraucheranschlussabschnitten 14.1 und 14.2 gewünscht ist, innerhalb des Schaltmittels 15.4, 15.4' gewählt werden kann, welcher der Leistungsbereitstellungsanschlussabschnitte 12.1, 12.2, 12.3 verbunden werden soll. So kann jedes Schaltmittel 15.4, 15.4' den ihm zugeordneten Verbraucheranschlussabschnitt 14.1, 14.2 mit demselben oder unterschiedlichen Leistungsbereitstellungsanschlussabschnitten 12.1, 12.2, 12.3 verbinden.

Zusammenfassend betrifft die Erfindung eine Vorrichtung, die elektrische Leistung innerhalb eines elektrischen Bordnetzes eines Fahrzeugs verteilen kann. Hierzu kann die Vorrichtung ein Steuermittel aufweisen, das entsprechend empfangener Informationen von Verbrauchern, Leistungsbereitstellern wie Brennstoffzellen, Photovoltaikpanelen und Range-Extendern, und/oder elektrischen Energiespeichern die Schalteinrichtung der Vorrichtung in bestimmte Schaltzustände schaltet, um die Leistung zu verteilen. Da bevorzugt sämtliche Leitungen innerhalb der Vorrichtung verlaufen, müssen außerhalb der Vorrichtung nur Zuleitungen zu den entsprechenden Anschlüssen vorgesehen werden, was die Komplexität eines Energieversorgungsystems, das eine solche Vorrichtung aufweist reduziert.

Gemäß einem weiteren Aspekt der Erfindung wird darauf hingewiesen, dass statt des in den Zeichnungen gezeigten einen elektrischen Energiespeichers 3 auch mehrere elektrische Energiespeicher vorhanden sein können, wobei dann der Energiespeicheranschluss 13 mehrere Energiespeicheranschlussabschnitte umfasst, mit denen jeweils ein elektrischer Energiespeicher verbunden werden kann. Die Vorrichtung 10 ist dann bevorzugt so ausgebildet, dass mit Hilfe des Schaltmittels eine Steuerung des Leistungsflusses von bzw. zu den einzelnen elektrischen Energiespeichern erfolgen kann.

### BEZUGSZEICHENLISTE

- 1: Energieversorgungsystem
- 2: Leistungsbereitsteller/Brennstoffzelle
- 3: elektrischer Energiespeicher
- 4: elektrischer Verbraucher
- 10: Vorrichtung
- 12: Leistungsbereitstellungsanschluss
- 12.1: Leistungsbereitstellungsanschlussabschnitt
- 12.2: Leistungsbereitstellungsanschlussabschnitt
- 12.3: Leistungsbereitstellungsanschlussabschnitt
- 13: Energiespeicheranschluss
- 14: Verbraucheranschluss
- 14.1: Verbraucheranschlussabschnitt
- 14.2: Verbraucheranschlussabschnitt
- 15: Schalteinrichtung
- 15.1: Schaltmittel
- 15.1': Schaltmittel
- 15.2: Schaltmittel
- 15.3: Rücklaufdiode
- 15.4: Schaltmittel
- 15.4': Schaltmittel
- 16: Spannungswandler
- 16.1: Spannungswandler
- 16.2: Spannungswandler
- 16.3: Spannungswandler
- 17: Modul
- 18: Steuermittel
- 19: Informationsschnittstelle
- 20: Verzweigungspunkt
- 21: Verzweigungspunkt
- 22: Diode

## Patentansprüche

1. Vorrichtung (10) zur elektrischen Leistungsübertragung innerhalb eines elektrischen Energieversorgungssystems (1) eines Fahrzeugs, aufweisend:
- einen Leistungsbereitstellungsanschluss (12), der dazu ausgebildet ist, elektrisch mit mindestens einem Leistungsbereitsteller (2) verbunden zu werden;
- einen Energiespeicheranschluss (13), der dazu ausgebildet ist, elektrisch mit mindestens einem elektrischen Energiespeicher (3) verbunden zu werden;
- einen Verbraucheranschluss (14), der dazu ausgebildet ist, elektrisch mit mindestens einem elektrischen Verbraucher (4) verbunden zu werden; und
- eine Schalteinrichtung (15), wobei
die Vorrichtung (10) dazu ausgebildet ist,
- gemäß einem ersten Schaltzustand der Schalteinrichtung (15) eine direkte elektrische Verbindung zwischen dem Leistungsbereitstellungsanschluss (12) und dem Verbraucheranschluss (14), und
- gemäß einem zweiten Schaltzustand der Schalteinrichtung (15) eine direkte elektrische Verbindung zwischen dem Energiespeicheranschluss (13) und dem Verbraucheranschluss (14) herzustellen.

2. Vorrichtung (10) nach Anspruch 1, wobei
die Vorrichtung (10) mindestens einen Spannungswandler (16) aufweist.

3. Vorrichtung (10) nach Anspruch 2, wobei
die Vorrichtung (10) dazu eingerichtet ist, gemäß dem ersten Schaltzustand der Schalteinrichtung (15) eine elektrische Verbindung zwischen dem Energiespeicheranschluss (13) und dem Verbraucheranschluss (14) über einen der Spannungswandler (16) herzustellen, und/oder wobei
die Vorrichtung (10) dazu eingerichtet ist, gemäß dem zweiten Schaltzustand der Schalteinrichtung (15) eine elektrische Verbindung zwischen dem Leistungsbereitstellungsanschluss (12) und dem Verbraucheranschluss (14) über einen der Spannungswandler (16) herzustellen.

4. Vorrichtung (10) nach Anspruch 2 oder 3, wobei
der Leistungsbereitstellungsanschluss (12) mit dem Energiespeicheranschluss (13) über einen der Spannungswandler (16) elektrisch verbunden ist.

5. Vorrichtung (10) nach einem der Ansprüche 2 bis 4, wobei
die Schalteinrichtung (15) zur Realisierung der Schaltzustände mindestens ein Schaltmittel (15.1, 15.2) aufweist und mindestens eins der Schaltmittel (15.1, 15.2) mit mindestens einem der Spannungswandler (16) als Schaltmodul (17) ausgeführt ist.

6. Vorrichtung (10) nach Anspruch 5, wobei
das Modul (17) ein Gehäuse aufweist, in dem das mindestens eine Schaltmittel (15.1, 15.2) und der mindestens eine Spannungswandler (16) vorgesehen sind, oder wobei das Modul (17) ein Trägerelement aufweist, auf dem das mindestens eine Schaltmittel (15.1, 15.2) und der mindestens eine Spannungswandler (16) vorgesehen sind.

7. Vorrichtung (10) nach einem der vorstehenden Ansprüche, aufweisend
ein Steuermittel (18), das dazu ausgebildet ist, die Schaltzustände der Schalteinrichtung (15) einzustellen.

8. Vorrichtung (10) nach Anspruch 7, aufweisend
mindestens eine Informationsschnittstelle (19), die zum Empfang einer Information eines mit dem Leistungsbereitstellungsanschluss (12) verbundenen Leistungsbereitstellers (2) und/oder zum Empfang einer Information eines mit dem Energiespeicheranschluss (13) verbundenen elektrischen Energiespeichers (3) und/oder zum Empfang einer Information eines mit dem Verbraucheranschluss (14) verbundenen elektrischen Verbrauchers (4) ausgebildet ist, wobei die Schaltzustände in Abhängigkeit von der empfangenen Information eingestellt werden.

9. Vorrichtung (10) nach einem der vorstehenden Ansprüche, wobei
die Vorrichtung (10) dazu ausgebildet ist, elektrische Leistung von dem Leistungsbereitstellungsanschluss (12) zu dem Verbraucheranschluss (14) zu übertragen, und/oder wobei
die Vorrichtung (10) dazu ausgebildet ist, elektrische Leistung von dem Verbraucheranschluss (14) zu dem Energiespeicheranschluss (13) und/oder von dem Energiespeicheranschluss (13) zu dem Verbraucheranschluss (14) zu übertragen, und/oder wobei
die Vorrichtung (10) dazu ausgebildet ist, gleichzeitig elektrische Leistung von dem Leistungsbereitstellungsanschluss (12) und von dem Energiespeicheranschluss (13) zu dem Verbraucheranschluss (14) zu übertragen, und/oder wobei
die Vorrichtung (10) dazu ausgebildet ist, elektrische Leistung von dem Leistungsbereitstellungsanschluss (12) zu dem Energiespeicheranschluss (13) zu übertragen, wobei die Vorrichtung (10) vorzugsweise dazu ausgebildet ist, gleichzeitig mit der elektrischen Leistungsübertragung von dem Leistungsbereitstellungsanschluss (12) zu dem Energiespeicheranschluss (13), elektrische Leistung von dem Energiespeicheranschluss (13) zu dem Verbraucheranschluss (14) zu übertragen.

10. Vorrichtung (10) nach einem der vorstehenden Ansprüche, wobei die Vorrichtung (10) dazu ausgebildet ist, dass
mit dem Leistungsbereitstellungsanschluss (12) mindestens ein weiterer Leistungsbereitsteller (2) verbunden werden kann, wobei die Schalteinrichtung (15) dazu ausgebildet ist, die direkte Verbindung selektiv mit einzelnen mit dem Leistungsbereitstellungsanschluss (12) verbundenen Leistungsbereitstellern (2) herzustellen.

11. Vorrichtung (10) nach einem der vorstehenden Ansprüche, wobei die Vorrichtung (10) dazu ausgebildet ist, dass
mit dem Energiespeicheranschluss (13) mindestens ein weiterer elektrischer Energiespeicher (3) verbunden werden kann, wobei die Schalteinrichtung (15) dazu ausgebildet ist, die direkte Verbindung selektiv mit einzelnen mit dem Energiespeicheranschluss (13) verbundenen elektrischen Energiespeichern (3) herzustellen.

12. Vorrichtung (10) nach einem der vorstehenden Ansprüche, wobei die Vorrichtung (10) dazu ausgebildet ist, dass
mit dem Verbraucheranschluss (14) mindestens ein weiterer elektrischer Verbraucher (4) verbunden werden kann, wobei die Schalteinrichtung (15) dazu ausgebildet ist, die direkte Verbindung selektiv mit einzelnen mit dem Verbraucheranschluss (14) verbundenen elektrischen Verbrauchern (4) herzustellen.

13. Vorrichtung (10) nach einem der vorstehenden Ansprüche, wobei
der mindestens eine Leistungsbereitsteller (2) der mit dem Leistungsbereitstellunganschluss (12) verbunden werden kann, eine Brennstoffzelle, ein Photovoltaikpanel und/oder einen Range-Extender umfasst.

14. Energieversorgungsystem (1) für ein Fahrzeug, wobei das Energieversorgungsystem (1) folgende Elemente aufweist:
- mindestens einen Leistungsbereitsteller (2);
- mindestens einen elektrischen Energiespeicher (3);
- mindestens einen elektrischen Verbraucher (4); und
- eine Vorrichtung (10) nach einem der Ansprüche 1 bis 13, wobei
der mindestens eine Leistungsbereitsteller (2) mit dem Leistungsbereitstellungsanschluss (12) der Vorrichtung (10), der mindestens eine elektrische Energiespeicher (3) mit dem Energiespeicheranschluss (13) der Vorrichtung (10) und der mindestens eine elektrische Verbraucher (4) mit dem Verbraucheranschluss (14) der Vorrichtung (10) verbunden ist.

15. Fahrzeug mit einer Vorrichtung (10) nach einem der Ansprüche 1 bis 13 oder einem Energieversorgungssystem (1) nach Anspruch 14.
